# FASCICULE DE BREVET EUROPEEN

(11) **EP 2 449 751 B1**
(45) Date de publication et mention de la délivrance du brevet: **29.04.2015**
(21) Numéro de dépôt: 10745378.9
(22) Date de dépôt: 30.06.2010
(51) Int. Cl.: H04L 29/12, G06F 9/445

(54) **Procédé de démarrage d'un dispositif informatique dans un réseau, serveur et réseau de dispositifs informatiques pour sa mise en oeuvre**
Verfahren zum Starten eines Computers in einem Netzwerk, Server und Computernetzwerk zur Umsetzung des Verfahrens
Method of starting up a computing device in a network, server and network of computing devices for the implementation thereof

(30) Priorité: 01.07.2009 FR 0954481
(43) Date de publication de la demande: 09.05.2012
(73) Titulaire: Bull S.A.S., 78340 Les Clayes-sous-Bois (FR)
(72) Inventeur: TEMPORELLI, Frédéric, F-38130 Echirolles (FR)
(74) Mandataire: Bonnet, Michel
(86) Numéro de dépôt international: PCT/FR2010/051368
(87) Numéro de publication internationale: WO 2011/001110

(56) Documents cités:
- EP-A- 1 503 282
- US-A1- 2006 200 539
- RSCHNEID ET AL: "LinVDR bootet über NFS" VDR PORTAL >> LINUX >> BETRIEBSSYSTEM >> LINVDR, [Online] 20 mai 2004 (2004-05-20), - 9 septembre 2004 (2004-09-09) pages 1-36, XP002563568 Discussion Board Extrait de l'Internet: URL:http://www.vdrportal.de/board/thread.p hp?threadid=17346> [extrait le 2010-01-14]
- BRUCKNER F ET AL: "Cluster Node Install Guide" LANZHOU UNIVERSITY SUMMER SCHOOL 2005, [Online] 27 juin 2005 (2005-06-27), - 12 juillet 2005 (2005-07-12) pages I-10, XP002563569 Lanzhou, CN Extrait de l'Internet: URL:http://dslab.lzu.edu.cn:8080/docs/summ er_school_2005/bproc/remote_boot.pdf> [extrait le 2010-01-15]

## Description

La présente invention concerne un procédé de démarrage d'un dispositif informatique dans un réseau comportant un module d'adressage dynamique et un module de fourniture de fichiers de démarrage dudit dispositif informatique. Elle concerne également un serveur de fourniture de fichiers de démarrage et un réseau correspondant.

Une application particulière concernée par cette invention est le démarrage de serveurs dans un réseau constitué en grappe de serveurs. Dans ce type d'installation, mais aussi plus généralement dans toute installation de dispositifs informatiques interconnectés en réseau, une méthode d'adressage dynamique est en effet de préférence mise en oeuvre. Pour cela, un module d'adressage dynamique est prévu dans la grappe de serveurs. Au démarrage d'un système informatique dans la grappe de serveurs, celui-ci n'a tout d'abord pas de configuration réseau, en particulier pas d'adresse IP. Il en sollicite donc une auprès du module d'adressage dynamique en utilisant un protocole de communication spécifique tel que le protocole DHCP (de l'Anglais « Dynamic Host Configuration Protocol »). Plus précisément, selon ce protocole, une requête DHCP est diffusée dans le réseau par une application dite BIOS (de l'Anglais « Basic Input Output System ») de vérification d'entrées/sorties exécutée par une extension BIOS de la carte réseau du système informatique. Cette requête DHCP est notamment reçue par le module d'adressage dynamique qui renvoie la configuration réseau du système informatique également par diffusion dans le réseau.

Une fois que l'application BIOS a obtenu la configuration réseau du système informatique, elle est alors capable de solliciter un module de fourniture de fichiers de démarrage afin d'obtenir des fichiers lui permettant de poursuivre le processus de démarrage du système informatique.

L'invention s'applique plus particulièrement à un procédé de démarrage du type précité comportant les étapes suivantes :
- allocation au dispositif informatique, par le module d'adressage dynamique, d'une adresse dans le réseau,
- transmission, par le dispositif informatique au module de fourniture de fichiers de démarrage, d'au moins une requête de fichiers de démarrage, et
- fourniture, par le module de fourniture de fichiers de démarrage au dispositif informatique, de ces fichiers de démarrage en réponse à ladite au moins une requête,

Parmi les fichiers de démarrage fournis, certains sont des applications susceptibles d'avoir besoin de nouveau de la configuration réseau du système informatique. Le processus de démarrage comporte notamment une étape de chargement d'un système d'exploitation à l'aide d'une application spécifique qui, pour l'une ou l'autre de ses phases d'exécution (par exemple une phase communément qualifiée de « initialisation d'un système minimal » ou « initrd », ou une phase communément qualifiée de « service réseau »), nécessite la connaissance de la configuration réseau. Une nouvelle requête DHCP est alors diffusée dans le réseau par cette application spécifique et une nouvelle réponse est envoyée par le module d'adressage dynamique également par diffusion dans le réseau. En effet, il n'existe aujourd'hui aucun moyen pour que l'application de démarrage du système d'exploitation puisse retrouver les informations de configuration réseau fournies à l'application BIOS par le module d'adressage dynamique. Ainsi, au moins deux requêtes DHCP distinctes doivent être émises par le système informatique lors de son démarrage dans le réseau.

Dans une grappe de serveurs, déjà très sollicitée pour exécuter des calculs puissants, l'ensemble des requêtes d'adressage DHCP ainsi engendrées pénalise les performances des autres protocoles de communication utilisant le réseau. C'est d'autant plus pénalisant que les échanges de données par le protocole DCHP sont effectués à chaque fois par diffusion à l'ensemble des noeuds du réseau, i.e. par transmission en mode « broadcast ». Cela génère donc un bruit qu'il serait souhaitable de réduire.

Une solution radicale serait de supprimer toute communication utilisant le protocole DHCP dans le réseau, c'est-à-dire finalement de ne pas utiliser de système d'adressage dynamique. Il serait nécessaire alors de définir de manière statique la configuration réseau, et donc l'adresse IP de chaque dispositif informatique du réseau. Dans une application de grappe de serveurs, cette solution nécessiterait un mécanisme complexe de configuration du réseau lors du déploiement de chaque dispositif informatique, la persistance d'information de configuration réseau étant alors stockée dans l'image de chaque dispositif. On prendrait par conséquent le risque fort que les images ne soient plus homogènes entre les dispositifs informatiques.

Il peut ainsi être souhaité de prévoir un procédé de démarrage d'un dispositif informatique dans un réseau qui permette de s'affranchir au moins partiellement des problèmes et contraintes précités.

L'invention a donc pour objet un procédé de démarrage d'un dispositif informatique selon la revendication 1.

Le document "LinVDR bootet über NFS", extrait du site <http://www.vdrportal.de> le 14-01-2010, XP002563568, divulgue un moyen pour que les fichiers de démarrage fournis par le serveur de fichiers, notamment l'application de démarrage du système d'exploitation, puissent retrouver les informations de configuration réseau fournies à l'application BIOS par le module d'adressage dynamique par moyen d'une configuration manuelle du serveur de fichiers. Si l'adresse du dispositif informatique dans le réseau est fournie par le module de fourniture de fichiers de démarrage avec ces derniers lors de leur transmission au dispositif informatique, alors il n'est plus nécessaire de transmettre la deuxième requête d'adressage DHCP précitée lors de l'exécution du processus de démarrage à l'aide des fichiers fournis et le réseau est nettement moins pénalisé. Cet avantage est particulièrement sensible dans un contexte de calculateur HPC (de l'Anglais « High performance computing ») organisé en grappe de serveurs où la disponibilité du réseau pour les calculs est d'une importance majeure.

De façon optionnelle également, l'adresse du dispositif informatique allouée par le module d'adressage dynamique est transmise par le module de fourniture de fichiers de démarrage en tant que paramètre du noyau du système d'exploitation dans l'application de démarrage du système d'exploitation.

De façon optionnelle également, un procédé de démarrage selon l'invention peut comporter les étapes suivantes :
- exécution au démarrage, par le dispositif informatique, d'une première application dite BIOS de vérification d'entrées/sorties conçue pour exécuter l'émission d'une requête d'adressage dans le réseau, notamment par diffusion de cette requête dans le réseau selon le protocole DHCP,
- exécution suite à la réception des fichiers de démarrage, par le dispositif informatique, de l'application de démarrage du système d'exploitation sur la base de l'adresse fournie en paramètre.

De façon optionnelle également, les échanges entre le dispositif informatique et le module de fourniture de fichiers de démarrage sont établis selon le protocole de communication HTTP.

De façon optionnelle également, le module d'adressage dynamique et le module de fourniture de fichiers sont intégrés dans un même dispositif de type noeud de service du réseau.

De façon optionnelle également, le dispositif informatique est un noeud de traitement et le réseau une grappe de serveurs.

L'invention a également pour objet un serveur de fourniture de fichiers de démarrage selon la revendication 7.

L'invention a également pour objet un réseau de dispositifs informatiques selon la revendication 8.

L'invention sera mieux comprise à l'aide de la description qui va suivre, donnée uniquement à titre d'exemple et faite en se référant aux dessins annexés dans lesquels :
- la figure 1 représente schématiquement la structure générale d'un réseau de dispositifs informatiques selon un mode de réalisation de l'invention,
- la figure 2 illustre les étapes générales successives d'un procédé de démarrage d'un dispositif informatique quelconque du réseau de la figure 1, selon un mode de réalisation de l'invention,
- la figure 3 illustre en détail une première variante du procédé de la figure 2, et
- la figure 4 illustre en détail une seconde variante du procédé de la figure 2.

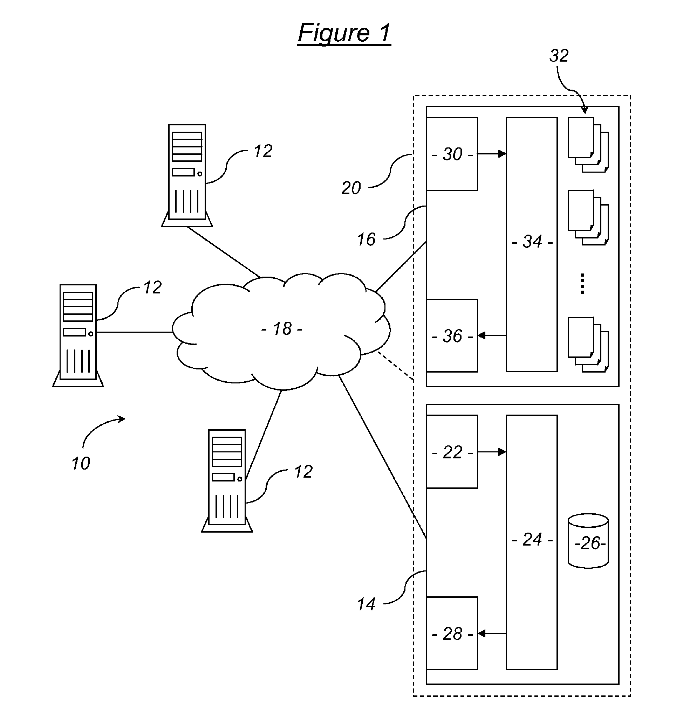

Le réseau 10 de dispositifs informatiques 12, 14, 16, 20 illustré sur la figure 1 est par exemple une représentation très simplifiée et incomplète d'un calculateur HPC organisé en grappe de serveurs interconnectés à l'aide d'au moins un réseau de transmission de données 18 à très large bande. Ce réseau 10 comporte par exemple notamment des dispositifs informatiques formant noeuds de calcul, identifiés par une référence commune 12, et des dispositifs informatiques formant noeuds de service parmi lesquels un module d'adressage dynamique 14 et un module de fourniture de fichiers de démarrage 16. Le module d'adressage dynamique 14 et le module de fourniture de fichiers de démarrage 16 peuvent être hébergés sur des serveurs différents, comme représenté sur la figure 1 en traits pleins, ou sur un même serveur 20, comme suggéré en traits interrompus. Tous ces dispositifs informatiques peuvent être équipés de cartes réseau Ethernet ou Infiniband (marques déposées).

D'une façon plus générale, la structure précitée convient à tout type de réseau de dispositifs informatiques, non nécessairement de type HPC, dans lequel le démarrage des dispositifs informatiques se fait en réseau et par mise en oeuvre d'un protocole d'adressage dynamique.

Le module d'adressage dynamique 14 est plus précisément conçu pour allouer dynamiquement une configuration réseau, notamment une adresse IP (de l'Anglais « Internet Protocol »), à chaque dispositif informatique 12 en phase de démarrage dans le réseau 10. Dans ses communications avec les autres éléments du réseau 10, il met par exemple en oeuvre le protocole DHCP connu pour remplir cette fonction. Pour cela, il comporte :
- une interface 22 de réception de requêtes d'adressage,
- une unité 24 de traitement de ces requêtes en fonction de données concernant le réseau qu'il stocke en mémoire 26 pour l'allocation dynamique de configurations réseau incluant des adresses IP, et
- une interface 28 d'émission de messages incluant ces configurations dans le réseau 10.

Conformément au protocole DHCP, les requêtes d'adressage et les messages générés en réponse sont transmis par diffusion dans le réseau 18 de transmission de données.

Le module 16 de fourniture de fichiers de démarrage est conçu pour fournir, à chaque dispositif informatique 12 qui en fait la demande dans le réseau 10, des paramètres et des fichiers applicatifs nécessaires à son démarrage complet, depuis l'exécution d'un chargeur d'amorçage réseau jusqu'au chargement d'un système d'exploitation. Pour cela il comporte :
- une interface 30 formant moyens de réception de requêtes de fichiers ou paramètres de démarrage 32 émise par un dispositif informatique 12 du réseau,
- une unité 34 de traitement de ces requêtes et de sélection de fichiers et/ou paramètres de démarrage en fonction du dispositif informatique 12 à l'origine de la requête, et
- une interface 36 formant moyens de transmission des fichiers et/ou paramètres de démarrage 32 sélectionnés.

Conformément à l'invention, l'unité de traitement 34 du module 16 de fourniture de fichiers de démarrage 32 est en outre conçue pour extraire d'une requête reçue l'adresse IP du dispositif informatique 12 qui l'a émise et pour fournir à l'interface 36 cette adresse IP allouée dynamiquement avec les fichiers et/ou paramètres sélectionnés.

Les fichiers de démarrage fournis au dispositif informatique 12 comportant au moins une application de démarrage d'un système d'exploitation, l'adresse IP du dispositif informatique 12 est transmise par le module de fourniture de fichiers de démarrage 16 en tant que paramètre de l'application de démarrage du système d'exploitation, notamment en tant que paramètre du noyau du système d'exploitation. Par « noyau » du système d'exploitation, on entend la partie fondamentale de ce système d'exploitation qui gère les ressources du dispositif informatique 12 concerné et permet à ses différents composants, matériels et logiciels, de communiquer entre eux.

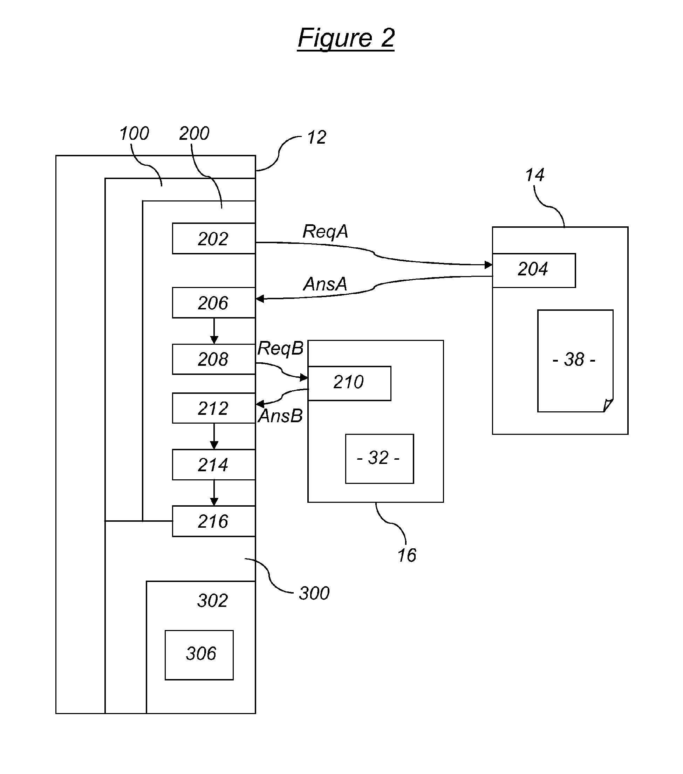

Un procédé de démarrage d'un dispositif informatique 12 quelconque du réseau 10 décrit précédemment va maintenant être détaillé en référence à la figure 2.

Lors d'une première étape 100 de mise sous tension, le dispositif informatique 12 exécute l'application BIOS de vérification d'entrées/sorties stockée, de façon classique, dans la mémoire morte de sa carte mère. Cette application BIOS comporte notamment un test automatique de mise sous tension, dit POST (de l'Anglais « Power-On Self-Test ») réalisé au début de cette étape pour déclarer les disques, configurer les composants et rechercher un système d'exploitation.

Dans cette application particulière où le démarrage du dispositif informatique 12 se fait en réseau à l'aide de fichiers et paramètres fournis par le module de fourniture de fichiers de démarrage 16, l'application BIOS est exécutée par une extension BIOS d'une carte réseau du dispositif informatique 12 avec l'activation d'un environnement 200 d'exécution de pré-amorçage, généralement qualifié d'environnement PXE (de l'Anglais « Preboot Execution Environment »).

Selon cet environnement 200 dans lequel le microprocesseur du dispositif informatique 12 exécute l'application BIOS, une requête DHCP d'adressage ReqA est diffusée dans le réseau 10 par le dispositif informatique 12 au cours d'une étape 202.

Cette requête ReqA est notamment reçue par l'interface 22 du module d'adressage dynamique 14 lors d'une étape 204. Son unité de traitement 24 identifie le dispositif informatique 12 émetteur grâce à l'adresse MAC (de l'Anglais « Media Access Control ») de sa carte réseau Ethernet, ou à l'identifiant GUID (de l'Anglais « Global Unique IDentifier ») de sa carte réseau Infiniband, incluse dans la requête ReqA. En fonction également de données 38 concernant le réseau que le module d'adressage dynamique 14 stocke en mémoire 26, l'unité de traitement 24 affecte une adresse IP, conforme au protocole TCP/IP, au dispositif informatique 12.

Plus précisément, dans le mode de réalisation envisagé, l'unité de traitement 24 génère une réponse AnsA structurée à partir de données contenues dans un fichier de configuration réseau 38 stocké en mémoire. Cette réponse comporte au moins les éléments suivants, extraits du fichier 38 :
- l'adresse IP du dispositif informatique 12,
- l'adresse IP du serveur de fichiers de démarrage 16,
- un identifiant de masque réseau pour le dispositif informatique 12,
- un identifiant de passerelle réseau pour le dispositif informatique 12,
- un identifiant DNS (de l'Anglais « Domain Name System »), et
- un identifiant d'application de configuration PXE nécessaire pour la poursuite du démarrage du dispositif informatique 12.

On notera que les identifiants de masque, de passerelle et DNS représentent des compléments de l'adresse IP.

L'étape 204 se termine par la diffusion dans le réseau 10 de la réponse AnsA à la requête ReqA.

Cette réponse AnsA est notamment reçue par le dispositif informatique 12 lors d'une étape 206. Au cours de cette même étape, la configuration IP du réseau 10 est enregistrée, et le protocole TCP/IP initialisé, dans le dispositif informatique 12.

Ensuite, lors d'une étape 208, le dispositif informatique 12 transmet une requête ReqB d'application de configuration PXE au module de fourniture de fichiers de démarrage 16. Cette requête est transmise selon le protocole TCP/IP et inclut l'identifiant d'application de configuration PXE reçu à l'étape précédente.

La requête ReqB est reçue par le module de fourniture de fichiers de démarrage 16 lors d'une étape 210. Son unité de traitement 34 identifie le dispositif informatique 12 émetteur grâce à l'extraction de son adresse IP incluse dans la requête ReqB et génère une réponse dynamique AnsB comportant l'application de configuration PXE requise parmi ses fichiers de démarrage 32 et au moins une partie des autres données de configuration reçues par le dispositif informatique 12 à l'étape 206, dont l'adresse IP précitée, en fonction de ce qui a été réintégré dans la requête ReqB. Notamment, dans le cas où l'application de configuration PXE comporte une application de démarrage d'un système d'exploitation, l'adresse IP du dispositif informatique 12 (ou plus globalement l'adresse IP et ses compléments qui définissent la configuration réseau du dispositif informatique 12) est incluse dans la réponse AnsB en tant que paramètre de l'application de démarrage du système d'exploitation et peut même être plus précisément incluse, le cas échéant, en tant que paramètre du noyau du système d'exploitation.

L'étape 210 se termine par la transmission par l'interface 36 de la réponse AnsB au dispositif informatique 12.

Cette réponse AnsB est reçue par le dispositif informatique 12 lors d'une étape 212. Au cours de cette même étape, l'exécution de l'application de configuration PXE reçue est lancée dans l'environnement PXE 200.

Ensuite, différentes phases successives prédéfinies dans l'application de configuration PXE et identifiées par une référence commune 214 sont exécutées. Elles peuvent notamment comporter la récupération et l'exécution d'un chargeur d'amorçage (« Boot Loader » en Anglais) conçu pour lancer le système d'exploitation du dispositif informatique 12, une application de démarrage du système d'exploitation et/ou son noyau.

Au cours d'une dernière étape 216 exécutée dans l'environnement PXE 200, le chargeur d'amorçage exécute le noyau du système d'exploitation avec les paramètres fournis par le module de fourniture de fichiers de démarrage 16, dont notamment l'adresse IP du dispositif informatique 12 et ses éventuels compléments. Au cours de cette étape, l'application BIOS prend fin et c'est le système d'exploitation 300 qui est désormais exécuté par le microprocesseur du dispositif informatique 12.

Dans ce nouvel environnement, des phases successives identifiées par une référence commune 302 sont exécutées, notamment pour démarrer correctement le système d'exploitation. Parmi ces phases, par exemple la phase « initrd » ou la phase de « service réseau », au moins une nécessite la connaissance de la configuration réseau, ou au moins l'adresse IP, telle que fournie par le module d'adressage dynamique 14 à l'étape 204. Mais, conformément au mode de réalisation envisagé, les informations de configuration réseau requises ont été transmises par le module de fourniture de fichiers de démarrage 16 en tant que paramètres du noyau du système d'exploitation à l'étape 210, de sorte qu'il est inutile de prévoir de nouveau l'émission d'une requête DHCP pour les obtenir. Il suffit de traiter les paramètres du noyau du système d'exploitation au cours d'une étape 306 pour pouvoir poursuivre l'exécution de la phase concernée.

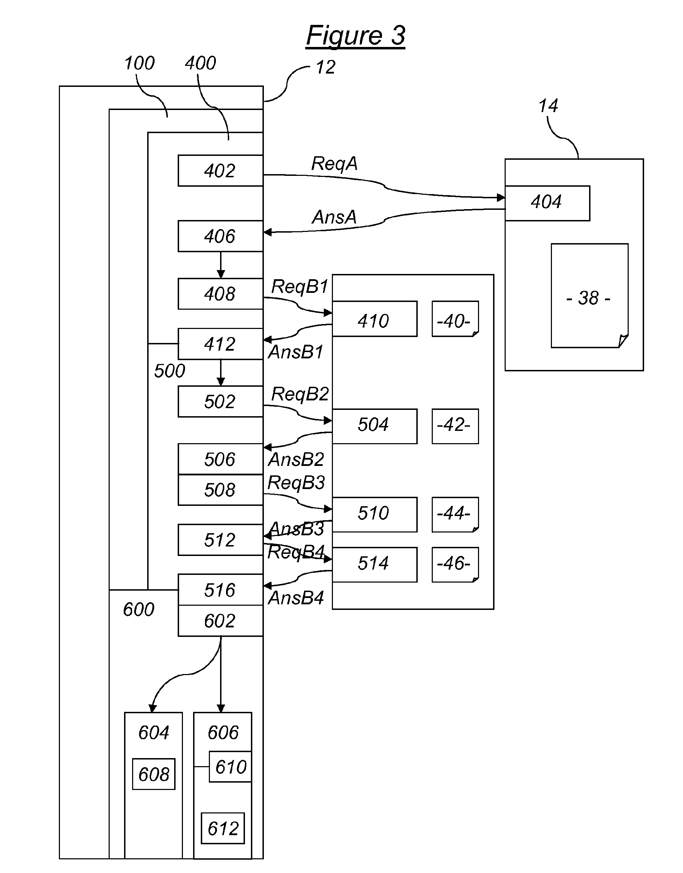

Une première variante du procédé précédemment décrit va maintenant être détaillée en référence à la figure 3. Selon cette variante, un identifiant d'application de configuration PXE n'est pas fourni par le module d'adressage dynamique 14 en réponse à la requête ReqA, mais directement un identifiant de chargeur d'amorçage. En outre, selon cette variante également, les échanges de données entre le dispositif informatique 12 et le module de fourniture de fichiers de démarrage se font conformément au protocole de transfert de fichiers TFTP (de l'Anglais « Trivial File Transfer Protocol »).

Cette première variante comporte l'étape 100 de mise sous tension, lors de laquelle le dispositif informatique 12 exécute l'application BIOS de vérification d'entrées/sorties. De même, l'application BIOS est exécutée par l'extension BIOS de la carte réseau du dispositif informatique 12 avec l'activation 400 d'un environnement PXE.

Selon cet environnement PXE 400 dans lequel le microprocesseur du dispositif informatique 12 exécute l'application BIOS, une requête DHCP d'adressage ReqA est diffusée dans le réseau 10 par le dispositif informatique 12 au cours d'une étape 402.

Cette requête ReqA est notamment reçue par l'interface 22 du module d'adressage dynamique 14 lors d'une étape 404. Son unité de traitement 24 identifie le dispositif informatique 12 émetteur grâce à l'adresse MAC de sa carte réseau Ethernet, ou à l'identifiant GUID de sa carte réseau Infiniband, incluse dans la requête ReqA. En fonction également de données 38 concernant le réseau que le module d'adressage dynamique 14 stocke en mémoire 26, l'unité de traitement 24 affecte une adresse IP au dispositif informatique 12.

Plus précisément, dans la variante envisagée, l'unité de traitement 24 génère une réponse AnsA structurée à partir de données contenues dans un fichier de configuration réseau 38 stocké en mémoire. Cette réponse comporte au moins les éléments suivants, extraits du fichier 38 :
- l'adresse IP du dispositif informatique 12,
- l'adresse IP du serveur de fichiers de démarrage 16,
- un identifiant de masque réseau pour le dispositif informatique 12,
- un identifiant de passerelle réseau pour le dispositif informatique 12,
- un identifiant DNS (de l'Anglais « Domain Name System »), et
- un identifiant de chargeur d'amorçage nécessaire pour la poursuite du démarrage du dispositif informatique 12.

L'étape 404 se termine par la diffusion dans le réseau 10 de la réponse AnsA à la requête ReqA.

Cette réponse AnsA est notamment reçue par le dispositif informatique 12 lors d'une étape 406. Au cours de cette même étape, la configuration IP du réseau 10 est enregistrée, et le protocole TFTP initialisé, dans le dispositif informatique 12.

Ensuite, lors d'une étape 408, le dispositif informatique 12 transmet une requête ReqB1 de chargeur d'amorçage au module de fourniture de fichiers de démarrage 16. Cette requête est transmise selon le protocole TFTP et inclut l'identifiant de chargeur d'amorçage reçu à l'étape précédente.

La requête ReqB1 est reçue par le module de fourniture de fichiers de démarrage 16 lors d'une étape 410. Son unité de traitement 34 identifie le dispositif informatique 12 émetteur grâce à l'extraction de son adresse IP incluse dans la requête ReqB1 et génère une réponse dynamique AnsB1 comportant le chargeur d'amorçage requis 40.

L'étape 410 se termine par la transmission TFTP de la réponse AnsB1 au dispositif informatique 12.

Cette réponse AnsB1 est reçue par le dispositif informatique 12 lors d'une étape 412. Au cours de cette même étape, l'exécution du chargeur d'amorçage reçu est lancée. Elle met fin à l'environnement PXE 400.

En cours d'exécution 500 du chargeur d'amorçage reçu, le dispositif informatique 12 transmet une requête ReqB2 de paramètres de démarrage au module de fourniture de fichiers de démarrage 16 lors d'une étape 502. Cette requête est transmise selon le protocole TFTP.

Elle est reçue par le module de fourniture de fichiers de démarrage 16 lors d'une étape 504. Son unité de traitement 34 identifie le dispositif informatique 12 émetteur grâce à l'extraction de son adresse IP incluse dans la requête ReqB2 et génère une réponse AnsB2 comportant au moins les éléments 42 suivants :
- un identifiant d'une image d'un système d'exploitation (application « initrd »),
- un identifiant de noyau de ce système d'exploitation, et
- des paramètres de ce noyau.

Au cours de cette étape, l'adresse IP du dispositif informatique 12 (ou plus globalement l'adresse IP et ses compléments qui définissent la configuration réseau du dispositif informatique 12) est incluse dans la réponse AnsB2 en tant que paramètre du noyau du système d'exploitation.

Cette réponse AnsB2 est reçue par le dispositif informatique 12 lors d'une étape 506.

Ensuite, lors d'une étape 508, le dispositif informatique 12 transmet une requête ReqB3 de noyau de système d'exploitation au module de fourniture de fichiers de démarrage 16. Cette requête est transmise selon le protocole TFTP et inclut l'identifiant de noyau de système d'exploitation reçu à l'étape précédente.

Elle est reçue par le module de fourniture de fichiers de démarrage 16 lors d'une étape 510. Son unité de traitement 34 identifie le dispositif informatique 12 émetteur grâce à l'extraction de son adresse IP incluse dans la requête ReqB3 et génère une réponse dynamique AnsB3 comportant le noyau de système d'exploitation requis 44.

L'étape 510 se termine par la transmission TFTP de la réponse AnsB3 au dispositif informatique 12.

Cette réponse AnsB3 est reçue par le dispositif informatique 12 lors d'une étape 512. Lors de cette même étape, le dispositif informatique 12 transmet une requête ReqB4 d'application « initrd » au module de fourniture de fichiers de démarrage 16. Cette requête est transmise selon le protocole TFTP et inclut l'identifiant d'application « initrd » reçu à l'étape 506.

Elle est reçue par le module de fourniture de fichiers de démarrage 16 lors d'une étape 514. Son unité de traitement 34 identifie le dispositif informatique 12 émetteur grâce à l'extraction de son adresse IP incluse dans la requête ReqB4 et génère une réponse dynamique AnsB4 comportant l'application « initrd » requise 46.

L'étape 514 se termine par la transmission TFTP de la réponse AnsB4 au dispositif informatique 12.

Au cours d'une dernière étape 516 de l'exécution 500 du chargeur d'amorçage, celui-ci exécute le noyau du système d'exploitation avec les paramètres fournis par le module de fourniture de fichiers de démarrage 16 à l'étape 504, dont notamment l'adresse IP du dispositif informatique 12 et ses éventuels compléments. Au cours de cette étape, l'application BIOS prend fin et c'est le système d'exploitation 600 qui est désormais exécuté par le microprocesseur du dispositif informatique 12.

Dans ce nouvel environnement, le noyau du système d'exploitation poursuit son exécution en lançant l'application « initrd » lors d'une étape 602 pour une initialisation des périphériques du dispositif informatique 12. Deux cas de figures peuvent se présenter : soit l'application « initrd » trouve un système de fichiers sur le réseau au cours de son exécution (étape 604), soit le système d'exploitation 600 bascule sur un système de fichiers minimal réel et standard du dispositif informatique 12 (étape 606).

Dans le premier cas de figure, l'étape 604 nécessite la connaissance de la configuration réseau, ou au moins l'adresse IP, telle que fournie par le module d'adressage dynamique 14 à l'étape 404. Mais, conformément au mode de réalisation envisagé, les informations de configuration réseau requises ont été transmises par le module de fourniture de fichiers de démarrage 16 en tant que paramètres du noyau du système d'exploitation à l'étape 504, de sorte qu'il est inutile de prévoir de nouveau l'émission d'une requête DHCP pour les obtenir. Il suffit de traiter les paramètres du noyau du système d'exploitation au cours d'une étape 608 pour pouvoir poursuivre l'exécution de l'étape 604.

Dans le second cas de figure, lors de l'étape 606, le système d'exploitation 600 initialise les périphériques du dispositif informatique 12 puis il bascule sur le système standard de fichiers minimal (étape 610). Dans ce système standard, il comporte une phase 612 nécessitant la connaissance de la configuration réseau, ou au moins l'adresse IP, telle que fournie par le module d'adressage dynamique 14 à l'étape 404. Il suffit de traiter les paramètres du noyau du système d'exploitation au cours de cette phase pour pouvoir poursuivre l'exécution de l'étape 612.

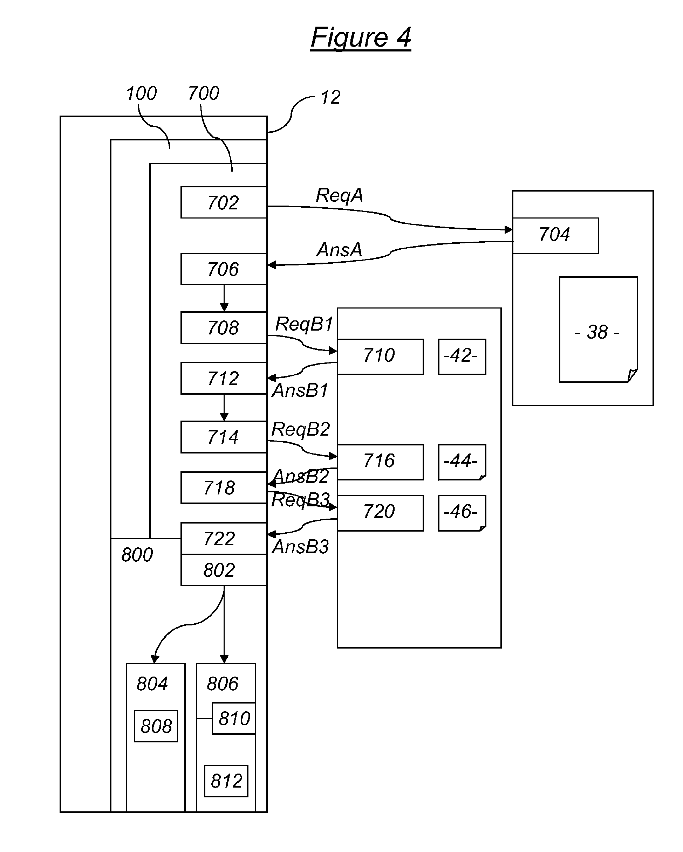

Une seconde variante du procédé précédemment décrit va maintenant être détaillée en référence à la figure 4.

Selon cette seconde variante, lors de l'étape 100 de mise sous tension, l'extension BIOS de la carte réseau du dispositif informatique 12 exécute l'application BIOS de vérification d'entrées/sorties avec l'activation 700 d'un environnement PXE intégrant déjà un chargeur d'amorçage. C'est le cas par exemple de l'environnement gPXE sous Linux (marques déposées). En outre, selon cette variante également, les échanges de données entre le dispositif informatique 12 et le module de fourniture de fichiers de démarrage se font conformément au protocole HTTP (de l'Anglais « HyperText Transfer Protocol ») comme cela est permis par l'environnement gPXE.

Selon cet environnement gPXE 700 dans lequel le microprocesseur du dispositif informatique 12 exécute l'application BIOS, une requête DHCP d'adressage ReqA est diffusée dans le réseau 10 par le dispositif informatique 12 au cours d'une étape 702.

Cette requête ReqA est notamment reçue par l'interface 22 du module d'adressage dynamique 14 lors d'une étape 704. Son unité de traitement 24 identifie le dispositif informatique 12 émetteur grâce à l'adresse MAC de sa carte réseau Ethernet, ou à l'identifiant GUID de sa carte réseau Infiniband, incluse dans la requête ReqA. En fonction également de données 38 concernant le réseau que le module d'adressage dynamique 14 stocke en mémoire 26, l'unité de traitement 24 affecte une adresse IP, conforme au protocole TCP/IP, au dispositif informatique 12.

Plus précisément, dans la seconde variante envisagée, l'unité de traitement 24 génère une réponse AnsA structurée à partir de données contenues dans un fichier de configuration réseau 38 stocké en mémoire. Cette réponse comporte au moins les éléments suivants, extraits du fichier 38 :
- l'adresse IP du dispositif informatique 12,
- l'adresse IP du serveur de fichiers de démarrage 16,
- un identifiant de masque réseau pour le dispositif informatique 12,
- un identifiant de passerelle réseau pour le dispositif informatique 12,
- un identifiant DNS (de l'Anglais « Domain Name System »), et
- un identifiant d'application de configuration gPXE nécessaire pour la poursuite du démarrage du dispositif informatique 12.

L'étape 704 se termine par la diffusion dans le réseau 10 de la réponse AnsA à la requête ReqA.

Cette réponse AnsA est notamment reçue par le dispositif informatique 12 lors d'une étape 706. Au cours de cette même étape, la configuration IP du réseau 10 est enregistrée, et le protocole HTTP initialisé, dans le dispositif informatique 12.

Ensuite, lors d'une étape 708, le dispositif informatique 12 transmet une requête ReqB1 de paramètres de démarrage au module de fourniture de fichiers de démarrage 16. Cette requête est transmise selon le protocole HTTP.

Elle est reçue par le module de fourniture de fichiers de démarrage 16 lors d'une étape 710. Son unité de traitement 34 identifie le dispositif informatique 12 émetteur grâce à l'extraction de son adresse IP incluse dans la requête ReqB1 et génère une réponse AnsB1 comportant au moins les éléments 42 suivants :
- un identifiant d'une image d'un système d'exploitation (application « initrd »),
- un identifiant de noyau de ce système d'exploitation, et
- des paramètres de ce noyau.

Au cours de cette étape, l'adresse IP du dispositif informatique 12 (ou plus globalement l'adresse IP et ses compléments qui définissent la configuration réseau du dispositif informatique 12) est incluse dans la réponse AnsB1 en tant que paramètre du noyau du système d'exploitation. L'extraction de l'adresse IP et son inclusion dans la réponse AnsB1 peut être réalisée par un script en langage PHP apte à générer une ligne de paramètres du noyau. On notera que ce script peut aussi être écrit dans un autre langage que PHP, tel que par exemple l'un des langages suivants : Python, Java, Shell, C, etc.

Cette réponse AnsB1 est émise par le module de fourniture de fichiers de démarrage 16 selon le protocole HTTP et est reçue par le dispositif informatique 12 lors d'une étape 712.

Ensuite, lors d'une étape 714, le dispositif informatique 12 transmet une requête ReqB2 de noyau de système d'exploitation au module de fourniture de fichiers de démarrage 16. Cette requête est transmise selon le protocole HTTP et inclut l'identifiant de noyau de système d'exploitation reçu à l'étape précédente.

Elle est reçue par le module de fourniture de fichiers de démarrage 16 lors d'une étape 716. Son unité de traitement 34 identifie le dispositif informatique 12 émetteur grâce à l'extraction de son adresse IP incluse dans la requête ReqB2 et génère une réponse AnsB2 comportant le noyau de système d'exploitation requis 44.

L'étape 716 se termine par la transmission HTTP de la réponse AnsB2 au dispositif informatique 12.

Cette réponse AnsB2 est reçue par le dispositif informatique 12 lors d'une étape 718. Lors de cette même étape, le dispositif informatique 12 transmet une requête ReqB3 d'application « initrd » au module de fourniture de fichiers de démarrage 16. Cette requête est transmise selon le protocole HTTP et inclut l'identifiant d'application « initrd » reçu à l'étape 712.

Elle est reçue par le module de fourniture de fichiers de démarrage 16 lors d'une étape 720. Son unité de traitement 34 identifie le dispositif informatique 12 émetteur grâce à l'extraction de son adresse IP incluse dans la requête ReqB3 et génère une réponse dynamique AnsB3 comportant l'application « initrd » requise 46.

L'étape 720 se termine par la transmission HTTP de la réponse AnsB3 au dispositif informatique 12.

Au cours d'une dernière étape 722, l'environnement gPXE 700 exécute le noyau du système d'exploitation avec les paramètres fournis par le module de fourniture de fichiers de démarrage 16 à l'étape 710, dont notamment l'adresse IP du dispositif informatique 12 et ses éventuels compléments. Au cours de cette étape, l'application BIOS prend fin et c'est le système d'exploitation 800 qui est désormais exécuté par le microprocesseur du dispositif informatique 12.

Dans ce nouvel environnement, le noyau du système d'exploitation poursuit son exécution comme dans la première variante. Les étapes 802, 804, 806, 808, 810 et 812 illustrées sur la figure 4 sont donc similaires aux étapes 602, 604, 606, 608, 610 et 612 illustrées sur la figure 3.

Il apparaît clairement qu'un procédé tel que celui décrit précédemment, selon l'une quelconque des deux variantes non limitatives détaillées, permet de limiter le nombre de requêtes DHCP d'adressage dynamique lors de la mise sous tension d'un dispositif informatique dans un réseau. Cet avantage est particulièrement sensible dans une application de calculateur HPC organisé en grappe de serveurs où le réseau (serveurs et réseaux de transmission de données) est par ailleurs très sollicité pour effectuer des calculs.

La seconde variante présente en outre l'avantage de profiter de la souplesse de l'environnement gPXE pour communiquer selon le protocole http avec le module de fourniture de fichiers de démarrage.

On notera par ailleurs que l'invention n'est pas limitée au mode de réalisation décrit précédemment. Notamment, elle n'est pas limitée aux protocoles évoqués (DHCP, TFTP, HTTP, IP, TCP/IP) mais s'étend à tout autre protocole équivalent existant ou à venir.

D'une façon plus générale, il apparaîtra à l'homme de l'art que diverses modifications peuvent être apportées au mode de réalisation décrit ci-dessus, à la lumière de l'enseignement qui vient de lui être divulgué. Dans les revendications qui suivent, les termes utilisés ne doivent pas être interprétés comme limitant les revendications au mode de réalisation exposé dans la présente description.

## Revendications

1. Procédé de démarrage d'un dispositif informatique (12) dans un réseau (10) comportant un module d'adressage dynamique (14) et un module (16) de fourniture de fichiers de démarrage (32) dudit dispositif informatique, comportant les étapes suivantes :
- allocation (204) au dispositif informatique (12), par le module d'adressage dynamique (14), d'une adresse dans le réseau (10),
- transmission (208), par le dispositif informatique (12) au module (16) de fourniture de fichiers de démarrage, d'au moins une requête (ReqB) de fichiers de démarrage (32) comportant au moins une application de démarrage d'un système d'exploitation, cette requête (ReqB) comportant l'adresse du dispositif informatique (12) allouée par le module d'adressage dynamique (14), et
- fourniture (210), par le module (16) de fourniture de fichiers de démarrage au dispositif informatique (12), de ces fichiers de démarrage en réponse à ladite au moins une requête (ReqB),
**caractérisé en ce qu'**il comporte en outre une exécution, par le module (16) de fourniture de fichiers de démarrage, des étapes suivantes :
- extraction (210), dans ladite au moins une requête (ReqB), de l'adresse du dispositif informatique (12) allouée par le module d'adressage dynamique (14),
- insertion (210) de cette adresse en tant que paramètre de l'application de démarrage du système d'exploitation destinée à être fournie au dispositif informatique (12) en réponse à ladite au moins une requête.

2. Procédé de démarrage selon la revendication 1, dans lequel l'adresse du dispositif informatique (12) allouée par le module d'adressage dynamique (14) est transmise par le module (16) de fourniture de fichiers de démarrage en tant que paramètre du noyau du système d'exploitation dans l'application de démarrage du système d'exploitation.

3. Procédé de démarrage selon la revendication 1 ou 2, comportant les étapes suivantes :
- exécution (100) au démarrage, par le dispositif informatique (12), d'une première application dite BIOS de vérification d'entrées/sorties conçue pour exécuter l'émission (202) d'une requête d'adressage (ReqA) dans le réseau (10), notamment par diffusion de cette requête dans le réseau selon le protocole DHCP,
- exécution (216) suite à la réception (212) des fichiers de démarrage, par le dispositif informatique (12), de l'application de démarrage du système d'exploitation (300) sur la base de l'adresse fournie en paramètre.

4. Procédé de démarrage selon l'une quelconque des revendications 1 à 3, dans lequel les échanges entre le dispositif informatique (12) et le module (16) de fourniture de fichiers de démarrage sont établis selon le protocole de communication HTTP.

5. Procédé de démarrage selon l'une quelconque des revendications 1 à 4, dans lequel le module d'adressage dynamique (14) et le module (16) de fourniture de fichiers sont intégrés dans un même dispositif (20) de type noeud de service du réseau (10).

6. Procédé selon l'une quelconque des revendications 1 à 5 , dans lequel le dispositif informatique (12) est un noeud de traitement (12) et le réseau (10) est une grappe de serveurs (10).

7. Serveur (16) de fourniture de fichiers de démarrage dans un réseau (10) de dispositifs informatiques comportant :
- des moyens (30) de réception d'au moins une requête (ReqB) de fichiers de démarrage (32) comportant au moins une application de démarrage d'un système d'exploitation, cette requête étant émise par un dispositif informatique (12) du réseau et comportant l'adresse du dispositif informatique (12) allouée par un module d'adressage dynamique (14) du réseau, et
- des moyens (36) de fourniture de ces fichiers de démarrage au dispositif informatique (12) ayant émis ladite au moins une requête,
**caractérisé en ce que** les moyens (36) de fourniture de fichiers de démarrage sont conçus pour :
- extraire, dans ladite au moins une requête (ReqB), l'adresse du dispositif informatique (12) allouée par le module d'adressage dynamique (14),
- insérer cette adresse en tant que paramètre de l'application de démarrage du système d'exploitation destinée à être fournie au dispositif informatique (12) en réponse à ladite au moins une requête.

8. Réseau (10) de dispositifs informatiques comportant :
- un module d'adressage dynamique (14) conçu pour fournir une adresse dans le réseau à un dispositif informatique sur réception d'une requête d'adressage (ReqA) émise par ce dispositif informatique,
- un serveur (16) de fourniture de fichiers (32) selon la revendication 7,
- au moins un dispositif informatique (12) comportant des moyens d'émission d'au moins une requête d'adressage (ReqA) dans le réseau et des moyens de démarrage à l'aide de fichiers de démarrage fournis (32) par le serveur (16) de fourniture de fichiers.

## Patentansprüche

1. Verfahren zum Starten einer Computervorrichtung (12) in einem Netz (10) mit einem Modul (14) zur dynamischen Adressierung und einem Modul (16) zur Bereitstellung von Dateien (32) zum Starten der Computervorrichtung, wobei das Verfahren folgende Schritte umfasst:
- Zuordnen (204) einer Adresse im Netz (10) zur Computervorrichtung (12) über das Modul (14) zur dynamischen Adressierung,
- Übertragen (208) über die Computervorrichtung (12) mindestens einer Anfrage (ReqB) nach Startdateien (32) mit mindestens einer Anwendung zum Starten eines Betriebssystems zum Modul (16) zur Bereitstellung von Startdateien, wobei diese Anfrage (ReqB) die von dem Modul (14) zur dynamischen Adressierung zugeteilte Adresse der Computervorrichtung (12) umfasst, und
- Bereitstellen (210) dieser Startdateien für die Computervorrichtung (12) durch das Modul (16) zur Bereitstellung von Startdateien in Reaktion auf die mindestens eine Anfrage (ReqB),
**dadurch gekennzeichnet, dass** es ferner eine Durchführung der folgenden Schritte durch das Modul (16) zur Bereitstellung von Startdateien umfasst:
- Auslesen (210) in der mindestens einen Anfrage (ReqB) der von dem Modul (14) zur dynamischen Adressierung zugeteilten Adresse der Computervorrichtung (12),
- Einfügen (210) dieser Adresse als Parameter der Anwendung zum Starten des Betriebssystems, die dazu vorgesehen ist, in Reaktion auf die mindestens eine Anfrage für die Computervorrichtung (12) bereitgestellt zu werden.

2. Startverfahren nach Anspruch 1, bei dem die von dem Modul (14) zur dynamischen Adressierung zugeteilte Adresse der Computervorrichtung (12) über das Modul (16) zur Bereitstellung von Startdateien als Parameter des Kerns des Betriebssystems in der Anwendung zum Starten des Betriebssystems übertragen wird.

3. Startverfahren nach Anspruch 1 oder 2, das folgende Schritte umfasst:
- beim Starten, Ausführen (100), durch die Computervorrichtung (12), einer ersten, BIOS genannten Anwendung zur Überprüfung von Eingaben/Ausgaben, die dazu ausgelegt ist, das Senden (202) einer Adressieranfrage (ReqA) im Netz (10), insbesondere durch Aussenden dieser Anfrage im Netz gemäß dem DHCP-Protokoll auszuführen,
- nach dem Empfangen (212) der Startdateien, Ausführen (216) durch die Computervorrichtung (12) der Anwendung zum Starten des Betriebssystems (300) auf der Basis der als Parameter bereitgestellten Adresse.

4. Startverfahren nach einem der Ansprüche 1 bis 3, bei dem die Austauschvorgänge zwischen der Computervorrichtung (12) und dem Modul (16) zur Bereitstellung von Startdateien gemäß dem HTTP-Kommunikationsprotokoll durchgeführt werden.

5. Startverfahren nach einem der Ansprüche 1 bis 4, bei dem das Modul (14) zur dynamischen Adressierung und das Modul (16) zur Bereitstellung von Dateien in ein und derselben Vorrichtung (20) der Art Dienstknoten des Netzes (10) integriert sind.

6. Verfahren nach einem der Ansprüche 1 bis 5, bei dem die Computervorrichtung (12) ein Verarbeitungsknoten (12) und das Netz (10) ein Servercluster (10) ist.

7. Server (16) zur Bereitstellung von Startdateien in einem Netz (10) aus Computervorrichtungen, mit:
- Mitteln (30) zum Empfangen mindestens einer Anfrage (ReqB) nach Startdateien (32) mit mindestens einer Anwendung zum Starten eines Betriebssystems, wobei diese Anfrage von einer Computervorrichtung (12) des Netzes gesendet wird und die von einem Modul (14) zur dynamischen Adressierung des Netzes zugeteilte Adresse der Computervorrichtung (12) umfasst, und
- Mitteln (36) zur Bereitstellung dieser Startdateien für die Computervorrichtung (12), die die mindestens eine Anfrage gesendet hat,
**dadurch gekennzeichnet, dass** die Mittel (36) zur Bereitstellung von Startdateien dazu ausgelegt sind:
- in der mindestens einen Anfrage (ReqB) die von dem Modul (14) zur dynamischen Adressierung zugeteilte Adresse der Computervorrichtung (12) auszulesen,
- diese Adresse als Parameter der Anwendung zum Starten des Betriebssystems, die dazu vorgesehen ist, in Reaktion auf die mindestens eine Anfrage für die Computervorrichtung (12) bereitgestellt zu werden, einzufügen.

8. Netz (10) aus Computervorrichtungen, mit:
- einem Modul (14) zur dynamischen Adressierung, das dazu ausgelegt ist, eine Adresse im Netz beim Empfangen einer von einer Computervorrichtung gesendeten Adressieranfrage (ReqA) für diese Computervorrichtung bereitzustellen,
- einem Server (16) zur Bereitstellung von Dateien (32) nach Anspruch 7,
- mindestens einer Computervorrichtung (12) mit Mitteln zum Senden mindestens einer Adressieranfrage (ReqA) im Netz und mit Mitteln zum Starten mittels von dem Server (16) zur Bereitstellung von Dateien bereitgestellter Startdateien (32).

## Claims

1. A method of starting up a computing device (12) in a network (10) comprising a dynamic addressing module (14) and a module (16) for providing start-up files (32) for said computing device, comprising the following steps:
- allocation (204) to the computing device (12), by the dynamic addressing module (14), of an address in the network (10),
- transmission (208), by the computing device (12) to the module (16) for providing start-up files, of at least one request (ReqB) for start-up files (32) comprising at least one operating system start-up application, this request (ReqB) comprising the address of the computing device (12) allocated by the dynamic addressing module (14), and
- provision (210), by the module (16) for providing start-up files to the computing device (12), of these start-up files in response to said at least one request (ReqB),
**characterised in that** it further comprises an execution, by the module (16) for providing start-up files, the following steps:-
- extraction (210), in said at least one request (ReqB), of the address of the computing device (12) allocated by the dynamic addressing module (14),
- insertion (210) of this address as a parameter for the operating system start-up application intended to be provided to the computing device (12) in response to said at least one request.

2. A method of starting up according to claim 1, in which the address of the computing device (12) allocated by the dynamic addressing module (14) is transmitted by the module (16) for providing start-up files as a parameter for the kernel of the operating system in the operating system start-up application.

3. A method of starting up according to claim 1 or 2, comprising the following steps:
- execution (100) at start-up, by the computing device (12), of a first application called BIOS for verifying inputs/outputs designed to carry out the emission (202) of an addressing request (ReqA) over the network (10), including the broadcast of this request over the network according to the DHCP protocol,
- execution (216) after receipt (212) of the start-up files, by the computing device (12), of the operating system start-up application (300) on the basis of the address supplied as a parameter.

4. A method of starting up according to any one of claims 1 to 3, in which the exchanges between the computing device (12) and the module (16) for providing start-up files are established according to the HTTP communication protocol.

5. A method of starting up according to any one of claims 1 to 4, in which the dynamic addressing module (14) and the module (16) for providing files are included in a single service node type device (20) of the network (10).

6. A method according to any one of claims 1 to 5, in which the computing device (12) is a processing node (12) and the network (10) is a cluster of servers (10).

7. A server (16) for providing start-up files in a network (10) of computing devices, comprising:
- means (30) for receiving at least one request (ReqB) for start-up files (32) comprising at least one operating system start-up application, this request being sent by a computing device (12) of the network and comprising the address of the computing device (12) allocated by the dynamic addressing module (14) of the network, and
- means (36) for providing these start-up files to the computing device (12) having sent said at least one request,
**characterized in that** the means (36) for providing start-up files are designed to:
- extract in said at least one request (RegB), the address of the computing device (12), allocated by the dynamic addressing module (14),
- insert this address as a parameter for the operating system start-up application intended to be provided to the computing device (12) in response to said at least one request.

8. A network (10) of computing devices comprising:
- a dynamic addressing module (14) designed to provide an address in the network to a computing device upon receipt of an address request (ReqA) sent by this computing device,
- a server (16) for providing files (32) according to claim 7,
- at least one computing device (12) comprising means for sending at least one addressing request (ReqA) over the network and means for starting up using start-up files (32) provided by the server (16) for providing files.
